(19) Europäisches Patentamt / European Patent Office / Office européen des brevets

(11) **EP 4 693 184 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**G06T 7/50** (2017.01)   **G06T 7/194** (2017.01)
**G06T 7/11** (2017.01)   **G06T 7/49** (2017.01)

(21) Application number: **24795587.5**

(52) Cooperative Patent Classification (CPC):
Y02D 10/00

(22) Date of filing: **01.03.2024**

(86) International application number:
**PCT/CN2024/079698**

(87) International publication number:
**WO 2024/222199 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Moore Threads Technology Co., Ltd.**
**Beijing 100036 (CN)**

(72) Inventor: **SUN, Tong**
**Beijing 100036 (CN)**

(74) Representative: **Lavoix**
**Bayerstraße 83**
**80335 München (DE)**

(30) Priority: **24.04.2023   CN 202310444667**

(54) **REGION-BASED DEPTH TEST METHOD AND APPARATUS, DEVICE, STORAGE MEDIUM AND COMPUTER PROGRAM PRODUCT**

(57)   A region-based depth test method and apparatus, a device, a storage medium, and a computer program product. The method includes: before executing a tile rasterization process, dividing a tile is divided to obtain a plurality of regions to be tested and region data corresponding to said regions, the region data including region information of said regions and graphic primitive information corresponding to said regions (S201); for each said region, generating a first depth range of said region on the basis of the region information of said region and the graphic primitive information corresponding to said region (S202); acquiring a second depth range of said region from a depth range cache (S203); and determining a depth test result of said region on the basis of the first depth range and the second depth range, the depth test result being used for indicating whether said region requires a pixel-level depth test (S204).

Before performing a raster process for a tile, split the tile to obtain multiple blocks to be tested and block data corresponding to each of the multiple blocks to be tested; the block data includes block information of the block to be tested and primitive information corresponding to the block to be tested — S201

For each of the multiple blocks to be tested, generate a first depth range of the block to be tested based on the block information of the block to be tested and the primitive information corresponding to the block to be tested — S202

Acquire a second depth range of the block to be tested from a depth range buffer — S203

Determine a depth test result for the block to be tested based on the first depth range and the second depth range; the depth test result is configured to indicate whether a pixel-level depth test is required for the block to be tested — S204

**FIG. 2**

EP 4 693 184 A1

**Description**

CROSS-REFERENCE TO RELATED APPLICATION

Embodiments of this application are filed based on and claims priority to Chinese patent application No. 202310444667.X, "Block-based depth test method and apparatus, device, and storage medium" filed on April 24, 2023, the contents of which are hereby incorporated by reference in its entirety.

TECHNICAL FIELD

The disclosure relates to, but is not limited to, the technical field of image processing, and in particular to a block-based depth test method and apparatus, a device, a storage medium, and a computer program product.

BACKGROUND

In current standard rendering pipelines, valid pixels are directly fed into a pixel shader section for shading after raster. In order to improve the performance of graphics processing units (GPUs), GPU manufacturers have performed many architectural optimizations, one of which is an Early depth test (Early-Ztest). The Early-Ztest refers to performing a depth test (Ztest) before executing the pixel shader, and thus some pixels obscured by depth can be culled at an early stage, to reduce the load of the pixel shader.

At present, in order to achieve a pixel-level Early-Ztest, the Early-Ztest must be performed after the raster process. That is, the Early-Ztest needs to be performed based on factors such as pixel raster and depth interpolation, which greatly impacts the culling efficiency.

SUMMARY

In view of the above, embodiments of the disclosure at least provide a block-based depth test method and apparatus, a device, a storage medium, and a computer program product.

The technical solutions in the embodiments of the disclosure may be implemented as follows.

An embodiment of the disclosure provides a block-based depth test method, including the following operations.

Before performing a raster process for a tile, the tile is split to obtain multiple blocks to be tested and block data corresponding to each of the multiple blocks to be tested. The block data includes block information of the block to be tested and primitive information corresponding to the block to be tested.

For each of the multiple blocks to be tested, a first depth range of the block to be tested is generated based on the block information of the block to be tested and the primitive information corresponding to the block to be tested.

A second depth range of the block to be tested is acquired from a depth range buffer. A depth test result for the block to be tested is determined based on the first depth range and the second depth range. The depth test result is configured to indicate whether a pixel-level depth test is required for the block to be tested.

An embodiment of the disclosure provides a block-based depth test apparatus, including a tile splitter section and a block depth test section.

The tile splitter section is configured to split, before performing a raster process for a tile, the tile to obtain multiple blocks to be tested and block data corresponding to each of the multiple blocks to be tested. The block data includes block information of the block to be tested and primitive information corresponding to the block to be tested.

The block depth test section is configured to generate, for each of the multiple blocks to be tested, a first depth range of the block to be tested based on the block information of the block to be tested and the primitive information corresponding to the block to be tested.

The block depth test section is further configured to acquire a second depth range of the block to be tested from a depth range buffer.

The block depth test section is further configured to determine a depth test result for the block to be tested based on the first depth range and the second depth range. The depth test result is configured to indicate whether a pixel-level depth test is required for the block to be tested.

An embodiment of the disclosure provides a computer device, including a memory and a processor. The memory stores a computer program executable on the processor. The processor, when executing the computer program, implements some or all of operations of the above method.

An embodiment of the disclosure provides a computer-readable storage medium, having stored thereon a computer program that, when executed by a processor, implements some or all of operations of the above method.

An embodiment of the disclosure provides a computer program product, including a computer program or instruction that, when executed by a processor, implements some or all of operations of the above method.

In the embodiments of the disclosure, a block-based depth test process is introduced before performing a raster process for a tile. Compared with the Early-Ztest process in the related art, in the disclosure, occluded objects that do not need to be rendered can be culled at an earlier stage, without proceeding to the raster stage, thereby saving computational resources for the raster section. Furthermore, by setting a depth range buffer and storing a second depth range of each block in the tile in the depth range buffer, a second depth range of the block to be tested can be directly acquired from the depth range buffer, thereby improving overall rendering efficiency.

It should be understood that the above general description and the subsequent detailed description are only exemplary and explanatory, and are not intended to limit the technical solutions of the disclosure.

BRIEF DESCRIPTION OF THE DRAWINGS

The drawings are incorporated into the specification and constitute a part of the specification. These drawings illustrate embodiments in accordance with the disclosure, and are used together with the specification to illustrate the technical solutions of the disclosure.

FIG. 1 is a schematic flowchart of a typical TBR pipeline according to an embodiment of the disclosure;

FIG. 2 is a first schematic diagram of an implementation process of a block-based depth test method according to an embodiment of the disclosure;

FIG. 3 is a second schematic diagram of an implementation process of a block-based depth test method according to an embodiment of the disclosure;

FIG. 4 is a third schematic diagram of an implementation process of a block-based depth test method according to an embodiment of the disclosure;

FIG. 5 is a fourth schematic diagram of an implementation process of a block-based depth test method according to an embodiment of the disclosure;

FIG. 6 is a fifth schematic diagram of an implementation process of a block-based depth test method according to an embodiment of the disclosure;

FIG. 7 is a sixth schematic diagram of an implementation process of a block-based depth test method according to an embodiment of the disclosure;

FIG. 8 is a seventh schematic diagram of an implementation process of a block-based depth test method according to an embodiment of the disclosure;

FIG. 9 is a schematic diagram of an overall architecture of a block-based depth test method according to an embodiment of the disclosure;

FIG. 10 is a schematic diagram of a block splitting process according to an embodiment of the disclosure;

FIG. 11 is a schematic structural diagram of a block depth test section according to an embodiment of the disclosure;

FIG. 12A is a schematic diagram of a comparison between depth ranges according to an embodiment of the disclosure;

FIG. 12B is another schematic diagram of a comparison between depth ranges according to an embodiment of the disclosure;

FIG. 12C is yet another schematic diagram of a comparison between depth ranges according to an embodiment of the disclosure;

FIG. 12D is still another schematic diagram of a comparison between depth ranges according to an embodiment of the disclosure;

FIG. 13 is a schematic diagram of a composition structure of a block-based depth test apparatus according to an embodiment of the disclosure; and

FIG. 14 is a schematic diagram of a hardware entity of a computer device according to an embodiment of the disclosure.

DETAILED DESCRIPTION

In order to make the purpose, technical solutions, and advantages of the disclosure clearer, the technical solutions of the disclosure is further described in detail below in conjunction with the drawings and embodiments. The described embodiments should not be regarded as limitations on the disclosure. All other embodiments obtained by those of ordinary skill in the art without making inventive efforts shall fall within the scope of protection of the disclosure.

In the following description, references to "some embodiments" describe a subset of all possible embodiments. However, it may be understood that "some embodiments" may be the same subset or different subsets of all possible embodiments, and may be combined with each other without conflict. The terms "first/second/third" are used to distinguish similar objects and do not indicate a specific order for the objects. It may be understood that "first/second/third" may be interchanged in the specific order or sequence where allowed, so that the embodiments of the disclosure described herein can be implemented in an order other than that illustrated or described herein.

Unless otherwise defined, all technical and scientific terms used in the disclosure have the same meanings as those commonly understood by those skilled in the art of the disclosure. The terms used in the disclosure are only for the purpose of describing the disclosure, and are not intended to limit the disclosure.

Tile-Based Rendering (TBR) is a process of subdividing a computer graphics image in an optical space by means of regular grids and rendering each part of the grids or tiles separately. An advantage of this design is that it reduces the consumption of memory and bandwidth compared to immediate-mode rendering systems that immediately draw an entire frame. As a result, tile rendering systems are widely used in low-power hardware devices. Tile rendering is sometimes referred to as a sort middle architecture, as geometric sorting is performed in the middle of the drawing pipeline rather than near the end of the drawing pipeline. TBR is the most commonly used architecture for mobile GPUs, providing significant advantages in reducing power consumption.

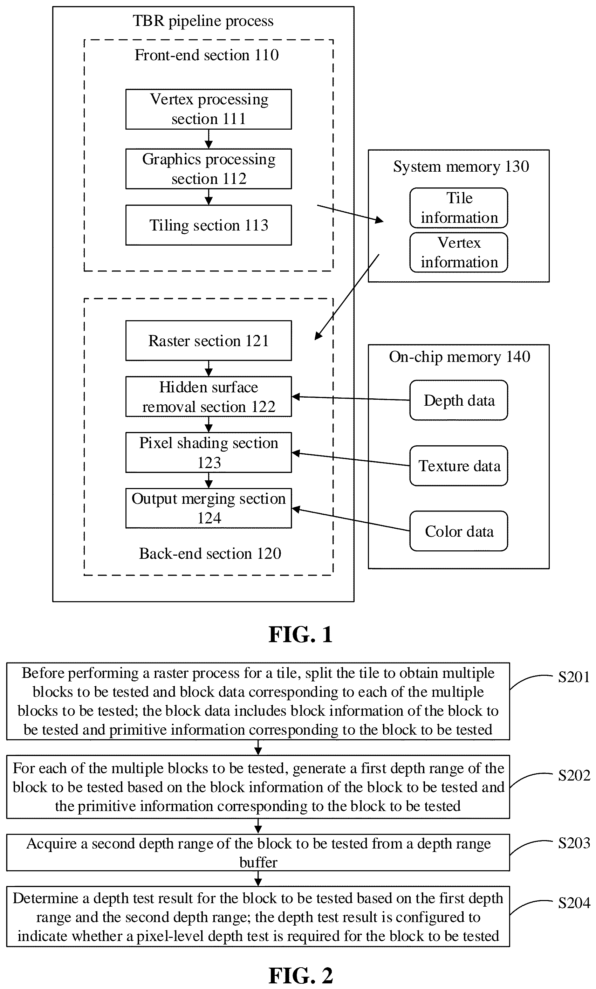

A typical TBR pipeline process is shown in FIG. 1. The TBR pipeline process is divided into a front-end section 110 and a back-end section 120. The front-end section 110 includes a vertex processing section 111, a graphics processing section 112, and a tiling section 113. The back-end section 120 includes a raster section 121, a Hidden Surface Removal (HSR) section 122, a pixel shading section 123, and an output merging section 124.

The front-end section 110 may perform vertex and primitive transformation (vertex processing), and graphics processing (including clip/cull, etc.). Then, during the tiling stage, the screen is divided, and graphic data covering each tile is recorded. The generated information is written to a system memory 130. In this way, the system memory 130 may store tile information (a primitive list) and vertex information (vertex data). The primitive list is a fixed-length array with a length of tile. Each element in the array is a linked list that stores pointers to all triangles intersecting the current tile, pointing to the vertex data. The vertex data stores vertex and vertex attribute data.

The back-end section 120 performs operations such as raster, depth test, and pixel shading, etc., and finally outputs to a render target. Since the data volume of each tile is small, the required depth data, texture data, or color data of the tile may be loaded onto the GPU and stored in on-chip SRAM, i.e., an on-chip memory 140 in FIG. 1. For example, the hidden surface removal section 122 may store depth data in a depth buffer within the on-chip memory 140, the pixel shading section 123 may store texture data in a texture buffer within the on-chip memory 140, and the output merging section 124 may store color data in a color buffer within the on-chip memory 140.

In the rendering process, a render object (image) is split into multiple tiles, so that the on-chip memory 140 may accommodate all data of a tile. After at least one drawing instruction reaches the GPU, the front-end section 110 sequentially processes each drawing instruction and stores the corresponding tile information and vertex information in the system memory 130 until the data stored in the system memory 130 reaches a preset threshold or the at least one drawing instruction has been processed. The back-end section 120 reads the corresponding vertex information tile by tile from the system memory 130 and performs subsequent processing. In this way, the access of the back-end section 120 to the system memory 130 is changed to the access of the back-end section 120 to the on-chip memory 140, improving the rendering efficiency.

An embodiment of the disclosure provides a block-based depth test method, which may be executed by a processor of a computer device. The computer device may refer to any device with data processing capabilities such as a server, a laptop, a tablet, a desktop computer, a smart television, a set-top box, and a mobile device (e.g., a mobile phone, a portable video player, a personal digital assistant, a dedicated messaging device, and a portable gaming device), etc.

FIG. 2 is a first schematic diagram of an implementation process of a block-based depth test method according to an embodiment of the disclosure. This method may be executed by a processor of a computer device, and will be described in conjunction with operations shown in FIG. 2.

At operation S201, before performing a raster process for a tile, the tile is split, to obtain multiple blocks to be tested and block data corresponding to each of the multiple blocks to be tested. The block data includes block information of the block to be tested and primitive information corresponding to the block to be tested.

In some embodiments, in the TBR architecture, the back-end section performs the subsequent rendering process tile by tile. Compared to depth test methods in the related art, in the disclosure, in order to perform the depth test earlier, a block-based depth test process according to the disclosure is performed before performing the raster process for the tile.

In some embodiments, the tile may be split into multiple blocks of the same size according to a preset splitting rule, and the obtained multiple blocks do not overlap. In this case, a block covered by a primitive is taken as the block to be tested, and the multiple blocks to be tested may be obtained. The block information of the block to be tested may include information such as a block range and block coordinates of the block to be tested. The primitive information corresponding to the block to be tested includes primitive shape information and primitive depth information of the primitive covering the block to be tested and etc.

At operation S202, for each of the multiple blocks to be tested, a first depth range of the block to be tested is generated based on the block information of the block to be tested and the primitive information corresponding to the block to be tested.

In some embodiments, the first depth range is a range of respective depth values of pixels in the block to be tested when rendering a current primitive for the block to be tested. Therefore, the range of the depth values within the block to be tested when rendering the primitive for the block to be tested (i.e., the first depth range) may be determined based on the block range of the block to be tested, and primitive depth information and primitive shape information of the current primitive corresponding to the block to be tested.

At operation S203, a second depth range of the block to be tested is acquired from a depth range buffer.

In some embodiments, the depth range buffer is configured to buffer a range of depth values of each block in the tile in real time. That is to say, the depth range buffer buffers a second depth range corresponding to each block to be tested. The second depth range represents a historical range of the depth values in the block to be tested. It may be understood that for the block to be tested, before performing a block depth test process for the current primitive, block depth test processes for other primitives have already been completed. In this case, the second depth range of the block to be tested stored in the depth range buffer is the range of the respective depth values of the pixels in the block to be tested when rendering the other primitives for the block to be tested.

In some embodiments, in an initial state, i.e., when the depth range buffer has just been allocated to the current tile, the second depth range of the block to be tested in the depth range buffer is determined based on the respective depth values of the pixels in the block to be tested in a depth buffer.

At operation S204, a depth test result for the block to be tested is determined based on the first depth range and the second depth range. The depth test result is configured to indicate whether a pixel-level depth test is required for the block to be tested.

In some embodiments, based on a numerical relationship between the first depth range and the second depth range, it may be determined whether the current primitive in the block to be tested needs to be rendered in the subsequent rendering process, thereby generating the depth test result indicating whether the pixel-level depth test is required for the block to be tested.

In the embodiments of the disclosure, a block-based depth test process is introduced before performing a raster process for a tile. Compared with the Early-Ztest process in the related art, the disclosure may cull occluded objects that do not need to be rendered earlier, without proceeding to the raster stage, thereby saving computational resources for the raster section. Furthermore, by setting a depth range buffer and storing a second depth range of each block in the tile through the depth range buffer, a second depth range of the block to be tested may be directly acquired from the depth range buffer, thereby improving overall rendering efficiency.

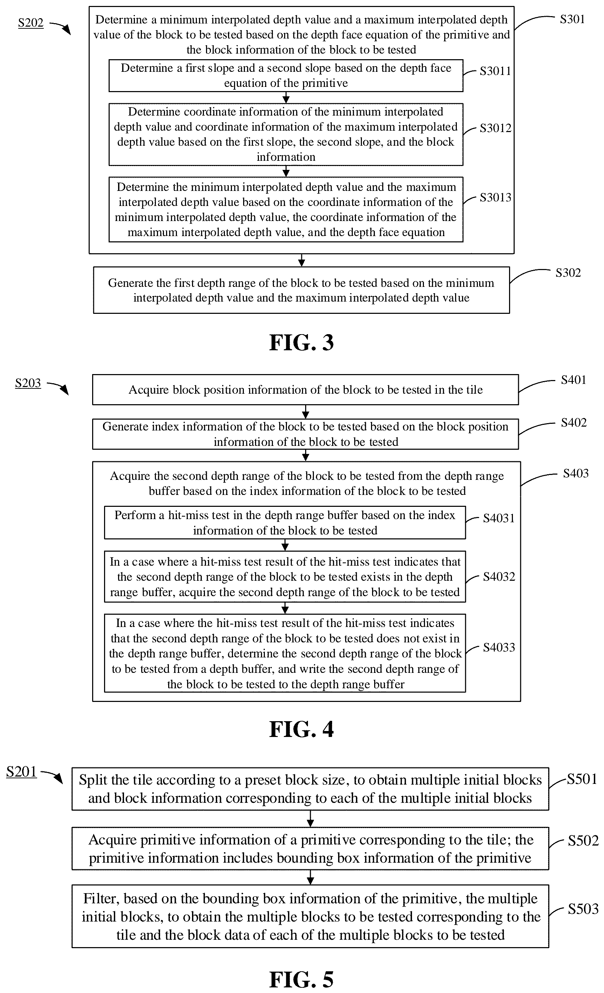

FIG. 3 is a second schematic diagram of an implementation process of a block-based depth test method according to an embodiment of the disclosure. This method may be executed by a processor of a computer device. The primitive information includes a depth face equation of a primitive. Based on FIG. 2, the operation S202 in FIG. 2 may be updated to operations S301 to S302, which will be described in conjunction with operations shown in FIG. 3.

At operation S301, a minimum interpolated depth value and a maximum interpolated depth value of the block to be tested are determined based on the depth face equation of the primitive and the block information of the block to be tested.

In some embodiments, the block information of the block to be tested may include position coordinates of each pixel in the block to be tested. Respective depth values of all pixels in the block to be tested may be determined in conjunction with the depth face equation corresponding to the primitive. The respective depth values of all the pixels are sorted, a maximum depth value is taken as the maximum interpolated depth value, and a minimum depth value is taken as the minimum interpolated depth value.

In some embodiments, the operation that the minimum interpolated depth value and the maximum interpolated depth value of the block to be tested are determined based on the depth face equation of the primitive and the block information of the block to be tested, may be achieved through operations S3011 to S3013.

At operation S3011, a first slope and a second slope are determined based on the depth face equation of the primitive.

The first slope represents a slope of a depth face of the primitive in a first direction, the second slope is a slope of the depth face of the primitive in a second direction, and the first direction, the second direction, and a depth direction are perpendicular to each other.

At operation S3012, coordinate information of the minimum interpolated depth value and coordinate information of the maximum interpolated depth value are determined based on the first slope, the second slope, and the block information.

The block to be tested is determined by a first block vertex, a second block vertex, a third block vertex, and a fourth block vertex. The block information includes vertex coordinates of the first block vertex, vertex coordinates of the second block vertex, vertex coordinates of the third block vertex, and vertex coordinates of the fourth block vertex. The operation that the coordinate information of the minimum interpolated depth value and the coordinate information of the maximum interpolated depth value are determined based on the first slope, the second slope, and the block information, may be achieved through the following approaches.

In some embodiments, in a case where the first slope is greater than or equal to 0 and the second slope is greater than or equal to 0, the vertex coordinates of the first block vertex are taken as the coordinate information of the minimum interpolated depth value, and the vertex coordinates of the third block vertex are taken as the coordinate information of the maximum interpolated depth value.

In some embodiments, in a case where the first slope is less than 0 and the second slope is less than 0, the vertex coordinates of the third block vertex are taken as the coordinate information of the minimum interpolated depth value, and the vertex coordinates of the first block vertex are taken as the coordinate information of the maximum interpolated depth value.

In some embodiments, in a case where the first slope is greater than or equal to 0 and the second slope is less than 0, the vertex coordinates of the second block vertex are taken as the coordinate information of the minimum interpolated depth value, and the vertex coordinates of the fourth block vertex are taken as the coordinate information of the maximum interpolated depth value.

In some embodiments, in a case where the first slope is less than 0 and the second slope is greater than or equal to 0, the vertex coordinates of the fourth block vertex are taken as the coordinate information of the minimum interpolated depth value, and the vertex coordinates of the second block vertex are taken as the coordinate information of the maximum interpolated depth value.

At operation S3013, the minimum interpolated depth value and the maximum interpolated depth value are determined based on the coordinate information of the minimum interpolated depth value, the coordinate information of the maximum interpolated depth value, and the depth face equation.

By substituting the coordinate information of the minimum interpolated depth value into the depth face equation, the minimum interpolated depth value may be obtained. By substituting the coordinate information of the maximum interpolated depth value into the depth face equation, the maximum interpolated depth value may be obtained.

At operation S302, the first depth range of the block to be tested is generated based on the minimum interpolated depth value and the maximum interpolated depth value.

In the embodiments of the disclosure, the first depth range of the block to be tested is determined by using the depth face equation of the primitive in the block to be tested, thereby achieving the subsequent low-precision depth test, culling the occluded objects earlier, reducing the workload of the subsequent rendering process, and improving the performance of the rendering pipeline.

FIG. 4 is a third schematic diagram of an implementation process of a block-based depth test method according to an embodiment of the disclosure. This method may be executed by a processor of a computer device. Based on FIG. 2, the operation S203 in FIG. 2 may be updated to operations S401 to S403, which will be described in conjunction with operations shown in FIG. 4.

At operation S401, block position information of the block to be tested in the tile is acquired.

In some embodiments, the block position information is configured to indicate a relative position of the block to be tested in the tile. For example, in a case where a tile size is 32×32 and a preset block size is 16×16, the tile may be split into four initial blocks, and block position information of these four initial blocks is (0, 0), (1, 0), (0, 1), and (1, 1), respectively.

At operation S402, index information of the block to be tested is generated based on the block position information of the block to be tested.

In some embodiments, the depth range buffer stores a second depth range of each initial block in the tile, and a storage address of the second depth range of the initial block in the depth range buffer is related to block position information of the initial block. Based on this, an index conversion algorithm may be preset, which may convert the block position information of the block to be tested into the index information of the block to be tested. Based on the index information, the storage address of the block to be tested may be determined, and then the second depth range of the block to be tested may be found from the depth range buffer.

At operation S403, the second depth range of the block to be tested is acquired from the depth range buffer based on the index information of the block to be tested.

In some embodiments, the operation that the second depth range of the block to be tested is acquired from the depth range buffer based on the index information of the block to be tested, may be achieved through operations S4031 to S4033.

At operation S4031, a hit-miss test is performed in the depth range buffer based on the index information of the block to be tested.

The hit-miss test is configured to determine whether the index information corresponding to the block to be tested exists in the depth range buffer. In a case where the index information exists in the depth range buffer, the storage address may be directly found based on the index information, thereby acquiring the corresponding second depth range. In a case where the index information does not exist in the depth range buffer, it indicates that the second depth range of the block to be tested does not exist in the current depth range buffer.

At operation S4032, in a case where a hit-miss test result of the hit-miss test indicates that the second depth range of the block to be tested exists in the depth range buffer, the second depth range of the block to be tested is acquired.

In this case, the storage address is directly found based on the index information, thereby acquiring the corresponding second depth range.

At operation S4033, in a case where the hit-miss test result of the hit-miss test indicates that the second depth range of the block to be tested does not exist in the depth range buffer, the second depth range of the block to be tested is determined from a depth buffer, and the second depth range of the block to be tested is written to the depth range buffer.

In this case, the second depth range of the block to be tested does not exist in the current depth range buffer. In this case, it is necessary to acquire respective depth values of all pixels in the block to be tested from the depth buffer, the respective depth values of all the pixels within the block to be tested are sorted, a maximum depth value and a minimum depth value corresponding to the block to be tested are determined, to obtain the second depth range and write the second depth range into the depth range buffer.

In the embodiments of the disclosure, the second depth range of each block in the tile is stored in the depth range buffer. In this way, during the process of acquiring the second depth range of the block to be tested, there is no need to acquire the second depth range of the block to be tested from the depth buffer, and it is directly acquired from the depth range buffer, thereby improving data query efficiency, enhancing depth test efficiency, and overall improving rendering speed.

FIG. 5 is a fourth schematic diagram of an implementation process of a block-based depth test method according to an embodiment of the disclosure. This method may be executed by a processor of a computer device. Based on any of the above embodiments, taking FIG. 2 as an example, the operation S201 in FIG. 2 may be updated to operations S501 to S503, which will be described in conjunction with operations shown in FIG. 5.

At operation S501, the tile is split according to a preset block size, to obtain multiple initial blocks and block information corresponding to each of the multiple initial blocks.

In some embodiments, the preset block size may be, but is not limited to, any one of the following: $16 \times 16$, $8 \times 8$, and $4 \times 4$.

In some embodiments, the block information may include block position information of the initial block in the tile and vertex information of the initial block.

The block position information indicates a relative position of the initial block in the tile. For example, in a case where a tile size is $32 \times 32$ and a preset block size is $16 \times 16$, the tile may be split into four initial blocks, and block position information of these four initial blocks is (0, 0), (1, 0), (0, 1), and (1, 1), respectively.

The vertex information of the initial block is coordinate information of the four block vertices of the initial block.

At operation S502, primitive information of a primitive corresponding to the tile is acquired. The primitive information includes bounding box information of the primitive.

In some embodiments, the primitive corresponding to the tile is a primitive that falls within the tile. The bounding box information of the primitive is bounding box information of a rectangular box enclosing the primitive. Exemplarily, the bounding box information may be determined by BBoxMinX, BBoxMaxX, BBoxMinY, and BBoxMaxY. That is to say, the bounding box information of the primitive is configured to indicate a coordinate range of the primitive in the X direction and a coordinate range of the primitive in the Y direction.

In some embodiments, the primitive information may further include at least one of the following: equations of edges of the primitive, or an equation of a face of the primitive.

At operation S503, the multiple initial blocks are screened based on the bounding box information of the primitive, to obtain the multiple blocks to be tested corresponding to the tile and the block data of each of the multiple blocks to be tested.

In some embodiments, initial blocks that overlap with the rectangular box enclosing the primitive may be determined among the multiple initial blocks, based on the bounding box information of the primitive and respective block information of all the initial blocks, and an initial block that overlaps with the rectangular box may be taken as the block to be tested.

In some embodiments, for each block to be tested, block information of the block to be tested is block information of an initial block corresponding to the block to be tested, and primitive information of the block to be tested is primitive information of the primitive corresponding to the tile.

In the embodiments of the disclosure, by splitting the tile into blocks, the low-precision depth test at the granularity of blocks is achieved, thereby reducing the workload of subsequent rendering process and improving the performance of the rendering pipeline.

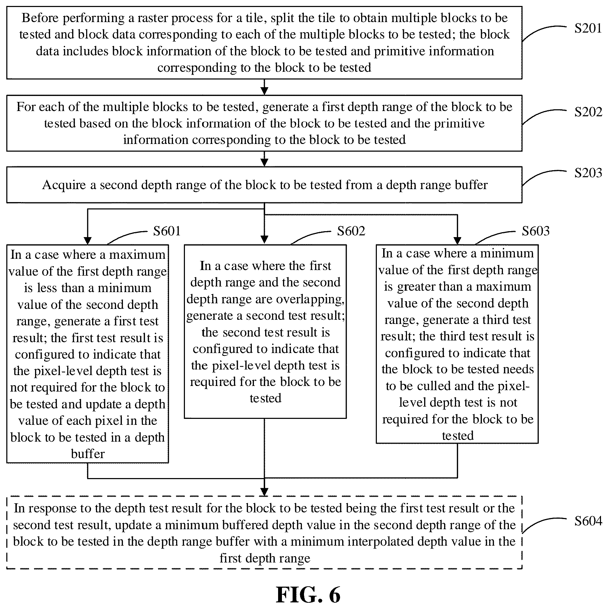

FIG. 6 is a fifth schematic diagram of an implementation process of a block-based depth test method according to an embodiment of the disclosure. This method may be executed by a processor of a computer device. Based on any of the above embodiments, taking FIG. 2 as an example, the operation S204 in FIG. 2 may be updated to operations S601 to S603, which will be described in conjunction with operations shown in FIG. 6.

At operation S601, in a case where a maximum value of the first depth range is less than a minimum value of the second depth range, a first test result is generated. The first test result is configured to indicate that the pixel-level depth test is not required for the block to be tested and update a depth value of each pixel in the block to be tested in a depth buffer.

In some embodiments, the first depth range is determined by the maximum interpolated depth value and the minimum interpolated depth value, and the second depth range is determined by a maximum buffered depth value and a minimum buffered depth value.

In some embodiments, in a case where the maximum interpolated depth value is less than the minimum buffered depth value, the first depth range and the second depth range do not overlap, and the entire first depth range lies in front of the second depth range. Therefore, a test result configured to indicate that the pixel-level depth test is not required for the block to be tested and update the depth value of each pixel in the block to be tested in the depth buffer may be generated.

Since the first depth range and the second depth range do not overlap and the entire first depth range lies in front of the second depth range, the depth value of each pixel at a corresponding position in the depth buffer may be updated based directly on a depth value of a respective pixel of the current primitive in the block to be tested.

At operation S602, in a case where the first depth range and the second depth range overlap, a second test result is generated. The second test result is configured to indicate that the pixel-level depth test is required for the block to be tested.

In some embodiments, in a case where a minimum interpolated depth value is less than or equal to a minimum buffered depth value, and the minimum buffered depth value is less than or equal to a maximum interpolated depth value, the first depth range and the second depth range overlap.

In other embodiments, in a case where a minimum interpolated depth value is less than or equal to a maximum buffered depth value, and the maximum buffered depth value is less than or equal to a maximum interpolated depth value, the first depth range and the second depth range overlap.

In either of the above two cases, a second test result indicating that the pixel-level depth test is required for the block to be tested may be generated.

After obtaining the second test result and performing the pixel-level depth test on the block to be tested, respective depth values of pixels at corresponding positions in the depth buffer are updated based on a test result of the pixel-level depth test. That is, for any pixel, in a case where a depth value corresponding to the pixel in the current primitive is less than a depth value of the pixel in the depth buffer, the depth value of the pixel in the depth buffer is updated based on the depth value corresponding to the pixel in the current primitive; and in a case where the depth value corresponding to the pixel in the current primitive is greater than or equal to the depth value of the pixel in the depth buffer, the depth value of the pixel in the depth buffer is kept unchanged.

At operation S603, in a case where a minimum value of the first depth range is greater than a maximum value of the second depth range, a third test result is generated. The third test result is configured to indicate that the block to be tested needs to be culled and the pixel-level depth test is not required for the block to be tested.

In some embodiments, in a case where the minimum interpolated depth value is greater than the maximum buffered depth value, the first depth range and the second depth range do not overlap, and the third test result configured to indicate that the block to be tested needs to be culled and the pixel-level depth test is not required for the block to be tested is generated.

After obtaining the third test result, depth values of the current primitive in the block to be tested are culled, and the pixel-level depth test is not required. Therefore, compared with the first test result and the second test result, in the current case, respective depth values of all pixels in the block to be tested in the depth buffer are maintained unchanged.

In some embodiments, the method may further include operation S604.

At operation S604, in response to the depth test result for the block to be tested being the first test result or the second test result, a minimum buffered depth value in the second depth range of the block to be tested is updated in the depth range buffer with a minimum interpolated depth value in the first depth range.

In some embodiments, in a case where the depth test result for the block to be tested is the first test result or the second test result, it indicates that the minimum interpolated depth value of the block to be tested on which the depth test is currently performed is already less than the minimum buffered depth value in the second depth range of the block to be tested in the depth range buffer. In this case, the minimum buffered depth value needs to be updated with the minimum interpolated depth value, that is, the minimum buffered depth value in the second depth range of the block to be tested in the depth range buffer is reduced to the minimum interpolated depth value.

In the embodiments of the disclosure, for each block to be tested, by comparing the first depth range of the block to be tested obtained through interpolation with the second depth range of the block to be tested in the depth range buffer, the occluded objects may be quickly and early culled, without proceeding to the raster stage. In this way, the workload may be reduced, and the performance of the rendering pipeline may be improved.

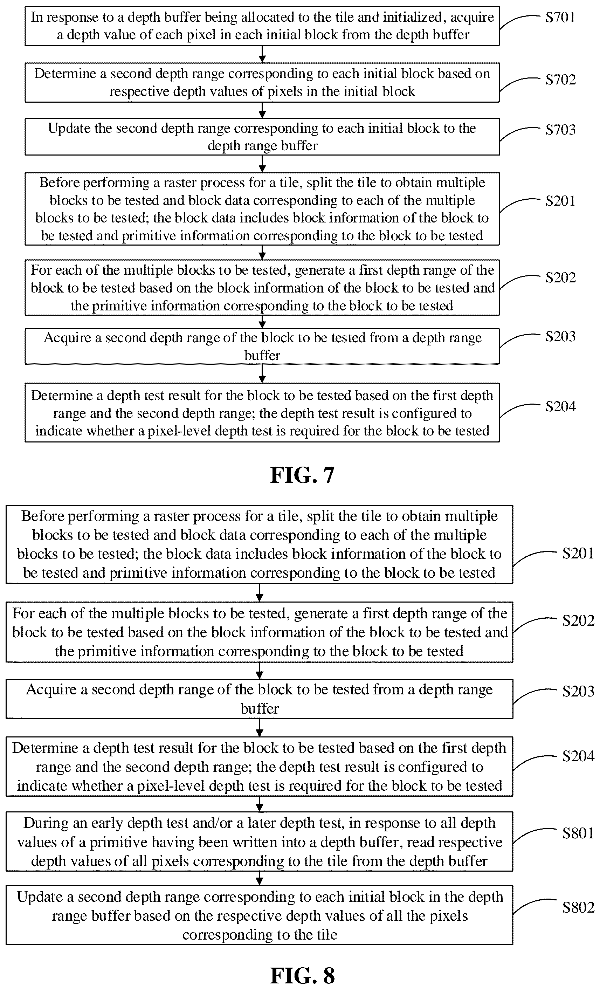

FIG. 7 is a sixth schematic diagram of an implementation process of a block-based depth test method according to an embodiment of the disclosure. This method may be executed by a processor of a computer device. Based on any of the above embodiments, taking FIG. 2 as an example, the method may further include operations S701 to S703, which will be described in conjunction with operations shown in FIG. 7.

At operation S701, in response to a depth buffer being allocated to the tile and initialized, a depth value of each pixel in each initial block is acquired from the depth buffer.

In the embodiment, the initialization process includes loading respective depth values of all pixels in the tile from memory and writing them into a depth buffer. At this point, the depth values buffered in the depth buffer are not infinity, but values between 0 and 1. Correspondingly, the depth range buffer is also initialized based on the respective depth values of all the pixels buffered in the depth buffer, and the initialization process has been completed.

Since the block-based depth test method according to the embodiment of the disclosure is applied to a graphic processor based on the TBR architecture, the back-end section of the TBR architecture processes rendering tasks tile by tile.

In some embodiments, in a case where the back-end section begins processing a rendering task corresponding to a tile, a depth buffer needs to be allocated to this tile and to be initialized. Afterwards, a depth value of each pixel in each initial block is acquired from the depth buffer.

At operation S702, a second depth range corresponding to each initial block is determined based on respective depth values of pixels in the initial block.

In some embodiments, for each initial block, the respective depth values of all the pixels within the initial block are sorted, to determine a maximum depth value and a minimum depth value corresponding to the initial block. The second depth range is determined by the maximum buffered depth value and the minimum buffered depth value. Furthermore, the maximum depth value may be taken as the maximum buffered depth value for the initial block, and the minimum depth value may be taken as the minimum buffered depth value for the initial block.

At operation S703, the second depth range corresponding to each initial block is updated to the depth range buffer.

In some embodiments, in the depth range buffer, the maximum buffered depth value and the minimum buffered depth value obtained corresponding to each initial block are taken as the second depth range corresponding to the initial block.

In the embodiments of the disclosure, in the case where the depth buffer is allocated to the current tile, respective second depth ranges of all initial blocks stored in the depth range buffer are updated based on the respective depth values of all pixels of the tile in the depth buffer. In this way, the depth range buffer can be made to be more accurately approximated to the depth buffer, achieving real-time updates of the depth range buffer.

FIG. 8 is a seventh schematic diagram of an implementation process of a block-based depth test method according to an embodiment of the disclosure. This method may be executed by a processor of a computer device. Based on any of the above embodiments, taking FIG. 2 as an example, the method may further include operations S801 to S802, which will be described in conjunction with operations shown in FIG. 8.

At operation S801, during an early depth test and/or a late depth test, in response to all depth values of a primitive having been written into a depth buffer, respective depth values of all pixels corresponding to the tile are read from the depth buffer.

The early depth test is the Early-Ztest (also referred to as Early Depth Test) in the related art. The early depth test may enable the depth test to occur before the pixel-shading stage, so that Pixel Shader calculations may be omitted for pixels that fail the test, thereby improving performance. The late depth test is a depth test performed after Pixel Shader in the related art.

In some embodiments, since the TBR architecture performs rendering on a tileby-tile basis, during the early depth test and/or the late depth test, in response to all the depth values of the primitive having been written into the depth buffer, that is, in the case where a last depth value of the primitive has been written into the depth buffer, the respective depth values of all the pixels corresponding to the tile are read from the depth buffer.

At operation S802, a second depth range corresponding to each initial block in the depth range buffer is updated based on the respective depth values of all the pixels corresponding to the tile.

In some embodiments, after obtaining the respective depth values of all the pixels in the tile, according to a block range of each initial block in the tile, respective depth values of all pixels within the block range may be sorted, to determine a maximum depth value and a minimum depth value corresponding to the initial block. Then, the maximum depth value may be taken as a maximum buffered depth value of the initial block, and the minimum depth value may be taken as a minimum buffered depth value of the initial block. Afterwards, in the depth range buffer, the obtained maximum buffered depth value and minimum buffered depth value corresponding to each initial block are taken as a second depth range corresponding to the initial block.

In some embodiments, since the depth test is performed on a depth value of each pixel within the tile and the depth value of the pixel within the tile is updated to a smaller depth value during the early depth test and/or the late depth test, the above operation for updating the second depth range is to update the maximum buffered depth value in the second depth range. In this way, a hit-miss range of the third test result may be expanded, and the block culling rate may be improved.

In the embodiments of the disclosure, the pixel-level depth test is performed during the early depth test and/or the late depth test. After the test is completed, the depth value of each pixel within the tile is updated in the depth buffer. The second depth range in the depth range buffer is updated with the depth value of each pixel in the depth buffer. In this way, by continuously updating the second depth range, the efficiency of block culling may be improved.

The following describes applications of the block-based depth test method according to the embodiments of the disclosure in practical scenarios.

The disclosure improves the TBR depth test (Ztest) in the related art, and proposes a TBR-based block depth test (Block Z) algorithm. This algorithm is designed to improve the execution efficiency of the early depth test (Early-Ztest) on the TBR architecture, and compensate for shortcomings of traditional Ztest algorithms in the following aspects: (1) to eliminate occluded objects as early as possible and improve the efficiency of the existing Early-Ztest, a block depth test section is added before the pixel-level Early-Ztest; (2) the early depth test (Early-Ztest) is performed on a block-by-block basis, thereby completing the occlusion test before raster, and reducing the load on the raster and pixel-shading sections; and (3) the advantage that the depth buffer buffers depth values of the current tile under the TBR architecture is fully utilized, and the read and write complexity of depth range information required for the block depth test is simplified through a two-level depth range information reading mechanism.

In some embodiments, based on the TBR architecture and by adding the block depth test (Block z) section before the raster stage (raster section), the disclosure utilizes the existing depth buffer to quickly perform the block depth test, thereby improving the overall performance of the depth test (Ztest), and the block depth test is implemented on GPU hardware. An overall design concept is as follows.

A triangle setup section constructs equations for edges and attribute of a triangle.

A tile splitter section splits a tile into blocks. Based on performance validation results, a block size may be configured as $16\times16$, $8\times8$, or $4\times4$. The tile splitter section is configured to extract block information, including block coordinates, the block size, and triangle data (including edge equations and a depth face equation) corresponding to the block; and package and transmit the block information to a block depth test (Block z) section.

The block depth test section is based on the input block information. On the one hand, the block depth test section determines a position (min_z_x, min_z_y) of a minimum interpolated depth value (bmin_z) and a position (max_z_x, max_z_y) of a maximum interpolated depth value (bmax_z) of the block based on equation parameters of the Z (face), and then interpolates the minimum interpolated depth value of the block and the maximum interpolated depth value of the block through an internal network arithmetic logic unit (ALU) section. On the other hand, the block depth test section requests a minimum buffered depth value (rmin_z) and a maximum buffered depth value (rmax_z) corresponding to the block in the depth buffer from a depth sorter (Zsorter) section. Afterwards, a Tester section of the block depth test takes "the minimum interpolated depth value, the maximum interpolated depth value" and "the minimum buffered depth value, the maximum buffered depth value" as inputs, and executes Block Ztest based on a comparison mode of the current draw Ztest. The comparison mode may include any one of the following: a LESS mode, and a GREATER mode. A test result of the block depth test process is output to a raster section and a HSR section, which includes a pixel-level Early-Ztest and late Ztest. The HSR section performs the pixel-level Ztest and updates the depth buffer based on the test result of the depth test process.

In some embodiments, in the disclosure, the depth range buffer (Zrange Buffer) stores depth range information Zrange (including the minimum buffered depth value and the maximum buffered depth value) of all blocks in the tile, and a quantity of block information stored in the depth range buffer is the same as a quantity of block information stored in the depth buffer. That is to say, depth range information of the same block is bound to one depth range buffer and one depth buffer. Data is written into the depth range buffer by the block depth test section and the depth sorter section. Specifically, the depth sorter section writes initial depth range information into the depth range buffer, and the block depth test section continuously updates the depth range information in the depth range buffer during the image drawing process.

In some embodiments, the depth sorter section may write initial values into the depth range buffer. The depth sorter section first loads depth values for all pixels (samples) of the block into the depth buffer, and then compares these depth values to obtain a minimum value and a maximum value, i.e. (the minimum buffered depth value, the maximum buffered depth value), and write them to the corresponding positions in the depth range buffer. In other embodiments, after performing ztest processing on the pixels of the primitive during the early depth test or the late depth test and writing the results into the depth buffer, the depth sorter section actively updates Zrange based on the latest depth information in the depth buffer, to improve the real-time performance for Zrange values. Block Z will initiate a Zrange request to Zsorter for a new Block.

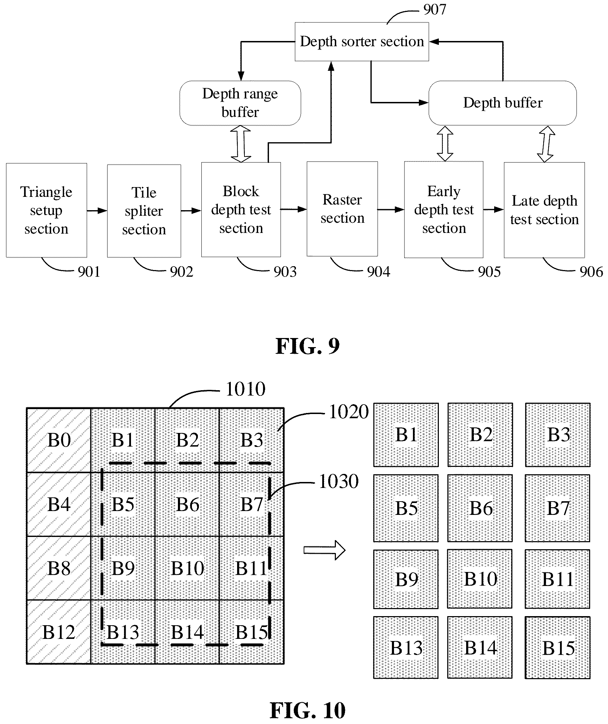

Please refer to FIG. 9, which illustrates a schematic diagram of an overall architecture of a block-based depth test method.

In some embodiments, for each tile, a triangle setup section 901 may calculate primitive information for each primitive in the tile. Taking the primitive as a triangle as an example, the primitive information may be triangle data, which includes equations of edges of the triangle, an equation of a depth face, and range information of a bounding box of the triangle.

Exemplarily, equations of edges of the triangle may be expressed in formulas (1) to (3).

EDGE0:

$$A0 * x + B0 * y + C0 = 0 \qquad (1)$$

EDGE1:

$$A1 * x + B1 * y + C1 = 0 \qquad (2)$$

EDGE2:

$$A2 * x + B2 * y + C2 = 0 \qquad (3)$$

The above equations (1) to (3) may be used for the raster process.

Exemplarily, the depth face equation of Z may be expressed in formula (4).

ZFace:

$$ZA * x + ZB * y + ZC = 0 \qquad (4)$$

Here, ZA may be regarded as a slope of the depth face of the triangle in the x direction, ZB may be regarded as a slope of the depth face of the triangle in the y direction, and ZC is a parameter of the depth face equation.

Exemplarily, the range information of the bounding box of the triangle may be represented by BBoxMinX, BBoxMaxX, BBoxMinY, and BBoxMaxY, that is, a range of the bounding box of the triangle in the X direction and a range of the bounding box of the triangle in the Y direction.

In some embodiments, for each tile, a tile splitter section 902 may split the tile at a granularity of blocks. Please refer to FIG. 10, which illustrates a schematic diagram of a block splitting process. In FIG. 10, a size of block 1010 is 32*32. In a case where a size of block 1020 is 8×8, the block 1010 may be split into 16 8×8 blocks from B0 to B15. Combined with range information 1030 of the bounding box of the triangle, the tile splitter section 902 may finally obtain 12 8×8 blocks, such as B1, B2, B3, B5, B6, B7, B9, B10, B11, B13, B14, and B15 in FIG. 10.

In some embodiments, the tile splitter section 902 packages and ransmits block information of a preset number of blocks and corresponding primitive information to a block depth test section 903. The preset number is related to a number of ALUs in the block depth test section 903. Exemplarily, taking four ALUs being included in the block depth test section 903 as an example, the tile splitter section 902 sequentially packages and transmits block information of four blocks and corresponding primitive information to the block depth test section 903.

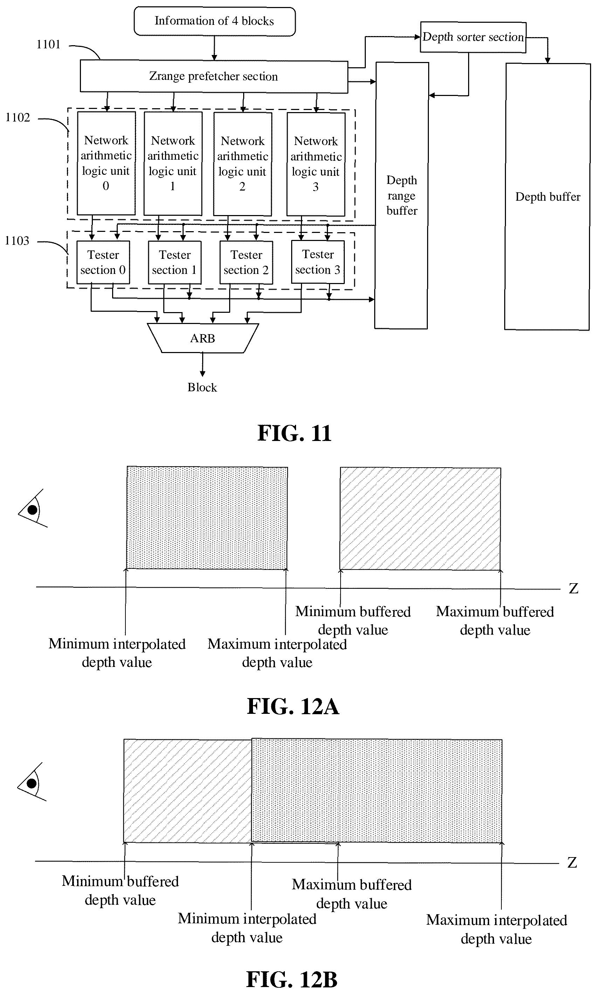

Please refer to FIG. 11, which illustrates a schematic structural diagram of a block depth test section 903.

After the block depth test section 903 receives the information of the four blocks, a depth range prefetcher (Zrange prefetcher) section 1101 determines index information (block index) of each block in the Zrange Buffer based on a relative position (including Offset_x and Offset_y) of the block in the tile, and prefetches depth range information of the block in the Zrange Buffer based on the index information. In some embodiments, a hit-miss test is performed in the Zrange Buffer based on the index information, to detect whether the depth range information corresponding to the block already exists in the Zrange Buffer. In a case where the depth range information corresponding to the block already exists in the Zrange Buffer, the depth range information corresponding to the block is directly retrieved and returned to a Tester section 1103 corresponding to the block. In a case where the depth range information corresponding to the block does not exist in the Zrange Buffer, the Zrange prefetcher section 1101 needs to notify the depth sorter section to retrieve the depth range information corresponding to the block from the depth buffer and then write it into the Zrange Buffer.

As shown in FIG. 11, the block depth test section 903 includes four independent network arithmetic logic units 1102 and four independent Tester sections 1103.

The network arithmetic logic units are configured to calculate coordinate information of a minimum interpolated depth value and coordinate information of a maximum interpolated depth value, and determine the minimum interpolated depth value (bmin_z) and the maximum interpolated depth value (bmax_z) through interpolation. The Tester section is configured to perform the depth test Ztest and update the Zrange Buffer.

For one block, depth values of the block should be within a range. Since the Z-face varies linearly, a minimum depth value of the block and a maximum depth value of the block must be at two of four corner points of boundaries of the block. Therefore, relationships between the minimum depth value of the block, the maximum depth value of the block and the parameters ZA, ZB of the Z-face are shown in Table 1:

Table 1

| ZA | ZB | Minimum depth value of the block | Maximum depth value of the block |
|------|------|----------------------------------|----------------------------------|
| >=0 | >=0 | Top-left vertex | Bottom-right vertex |
| <0 | <0 | Bottom-right vertex | Top-left vertex |
| >=0 | <0 | Bottom-left vertex | Top-right vertex |
| <0 | >=0 | Top-right vertex | Bottom-left vertex |

By combining the above table with coordinate information of the four vertices of the block, coordinate information of a minimum interpolated depth value and coordinate information of a maximum interpolated depth value may be determined. After obtaining the coordinate information of the minimum interpolated depth value and the coordinate information of the maximum interpolated depth value, the minimum interpolated depth value and the maximum interpolated depth value of the block may be determined by a Z-face equation, as shown in formulas (5) and (6):

$$bmin\_z = ZA * bmin\_z.\,Offset\_x + ZB * bmin\_z.\,Offset\_y + ZC \qquad (5)$$

$$bmax\_z = ZA * bmax\_z.\,Offset\_x + ZB * bmax\_z.\,Offset\_y + ZC \qquad (6)$$

Here, bmin_z is the minimum interpolated depth value, bmax_z is the maximum interpolated depth value, bmin_z.Offset_x and bmin_z.Offset_y are the coordinate information of the minimum interpolated depth value, and bmax_z.Offset_x and bmax_z.Offset_y are the coordinate information of the maximum interpolated depth value.

The Tester section is configured to compare "the minimum interpolated depth value and the maximum interpolated depth value" obtained based on interpolation with "the minimum buffered depth value and the maximum buffered depth value" fetched from the depth range buffer, to complete the depth test process for the block. There are three results for the depth test process, which are described respectively below.

In some embodiments, in a case where the maximum interpolated depth value is less than or equal to the minimum buffered depth value (bmax_z<=rmin _z), a first test result (which may be set as PASS) is obtained for the depth test process. The block with the first test result proceeds to the pixel-level Early-Ztest, but with reduced Ztest operations, and only Depth Buffer updates are required. A schematic diagram of a comparison between depth ranges is shown in FIG. 12A.

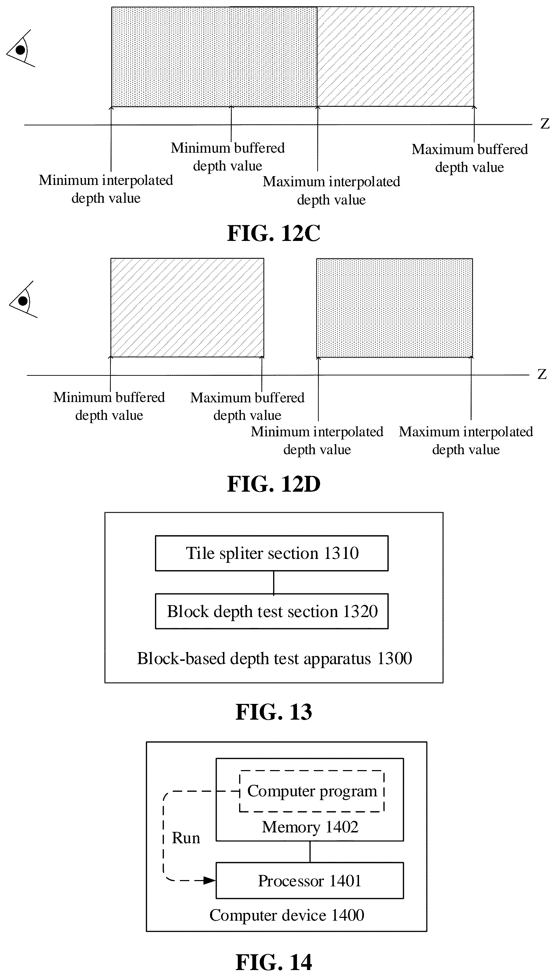

In some embodiments, in a case where the minimum interpolated depth value is less than or equal to the minimum buffered depth value (bmin_z<=rmin _z) and the minimum buffered depth value is less than or equal to the maximum interpolated depth value (rmin _z<=bmax_z), or in a case where the minimum interpolated depth value is less than or equal to the maximum buffered depth value (bmin_z<=rmin_z) and the maximum buffered depth value is less than or equal to the maximum interpolated depth value (rmin _z<=bmax _z), a second test result (which may be set as UNDONE) is obtained for the depth test process. The block with the second test result proceeds to the pixel-level Early-Ztest. Schematic diagrams of a comparison between depth ranges are shown in FIG. 12B and FIG. 12C.

In some embodiments, in a case where the maximum buffered depth value is less than or equal to the minimum interpolated depth value (rmax_z<=bmin_z), a third test result (which may be set as FAIL) is obtained for the depth test process. The block with the third test result is immediately culled and does not proceed to the pixel-level Early-Ztest. A schematic diagram of a comparison between depth ranges is shown in FIG. 12D.

In some embodiments, the test result for the block depth test process is output to a raster section 905, an early depth test section 906, and a late depth test section 907.

In some embodiments, the depth range buffer may be updated by the Tester section and the depth sorter section mentioned above. As described in the following embodiments, the depth range buffer is updated in the following cases.

A first case is that the Tester section updates the minimum buffered depth value (rmin_z) of the depth range information based on the test result obtained for the depth test process. That is, for the block with the test result being the first test result and the second test result, the minimum interpolated depth value of that block is directly updated to the minimum buffered depth value. In this way, the interpolated depth value of the block with the first test result may be continuously reduced, improving the accuracy of obtaining the first test result.

A second case is that after the depth buffer is allocated to the current tile and initialized, the depth sorter section reads depth values of all pixels in the block from the depth buffer, sorts all the depth values to obtain the minimum buffered depth value and the maximum buffered depth value, and then updates them to the depth range buffer.

A third case is that a method of actively updating the depth range buffer is added in the depth sorter section to further enhance the efficiency of the depth test. In this method, during the Early-Ztest or the late Ztest, after writing the last depth value of the primitive into the depth buffer, the depth sorter section is immediately notified to read depth values of all pixels of this tile from the depth buffer, and the depth range buffer is updated after sorting the depth values, thereby continuously updating the maximum buffered depth value and improving the efficiency of culling blocks.

Based on the above embodiments, the disclosure takes the Early-Ztest as the subject matter, and the block depth test section 903 is added before the raster section 904. Therefore, on the one hand, the depth test process is achieved, the efficiency of the Early-Ztest is improved, and the load on the raster section 904 and the pixel shading section is reduced; and on the other hand, through two update mechanisms of the depth range buffer, the depth range buffer is made to be more accurately approximated to the depth buffer, substantially achieving real-time updates of the depth range buffer, improving the efficiency of the depth test, thereby enhancing overall GPU rendering performance.

According to the embodiments of the disclosure, based on the implementation solution of the Early-Ztest under a block-based rendering architecture, the on-chip depth information buffer resources of the TBR architecture may be fully utilized, the block depth test logic is achieved, and the occluded objects may be quickly and early culled, without proceeding to the raster stage, which saves the computational resources. Furthermore, A method for updating the depth range buffer more efficiently not only increases the probability of performing the coarse depth test accurately, but also enhances the real-time performance of the depth range buffer, thereby improving the efficiency of block culling. Moreover, the block-based depth test method proposed in the disclosure is applicable to the TBR architecture, effectively reducing the workload of the pixel shading section and improving the performance of existing raster pipelines.

Based on the aforementioned embodiments, a block-based depth test apparatus is provided in an embodiment of the disclosure. This apparatus includes various sections, which may be implemented by a processor in a computer device or by a detailed logic circuit.

FIG. 13 is a schematic diagram of a composition structure of a block-based depth test apparatus according to an embodiment of the disclosure. As shown in FIG. 13, the block-based depth test apparatus 1300 includes a tile splitter section 1310 and a block depth test section 1320.

The tile splitter section 1310 is configured to split, before performing a raster process for a tile, the tile to obtain multiple blocks to be tested and block data corresponding to each of the multiple blocks to be tested. The block data includes block information of the block to be tested and primitive information corresponding to the block to be tested.

The block depth test section 1320 is configured to generate, for each of the multiple blocks to be tested, a first depth range of the block to be tested based on the block information of the block to be tested and the primitive information corresponding to the block to be tested.

The block depth test section 1320 is further configured to acquire a second depth range of the block to be tested from a depth range buffer.

The block depth test section 1320 is further configured to determine a depth test result for the block to be tested based on the first depth range and the second depth range. The depth test result is configured to indicate whether a pixel-level depth test is required for the block to be tested.

In some embodiments, the primitive information includes a depth face equation of a primitive. The block depth test section 1320 is further configured to determine a minimum interpolated depth value and a maximum interpolated depth value of the block to be tested based on the depth face equation of the primitive and the block information of the block to be tested; and generate the first depth range of the block to be tested based on the minimum interpolated depth value and the maximum interpolated depth value.

In the embodiments and other embodiments, "section" may refer to a portion of a circuit, a portion of a processor, a portion of a program or software, etc. Of course, "section" may also refer to a unit, a module, or a non-modularity.

In some embodiments, the block depth test section 1320 is further configured to: determine a first slope and a second slope based on the depth face equation of the primitive, herein the first slope represents a slope of a depth face of the primitive in a first direction, the second slope is a slope of the depth face of the primitive in a second direction, and the first direction, the second direction, and a depth direction are perpendicular to each other; determine coordinate information of the minimum interpolated depth value and coordinate information of the maximum interpolated depth value based on the first slope, the second slope, and the block information; and determine the minimum interpolated depth value and the maximum interpolated depth value based on the coordinate information of the minimum interpolated depth value, the coordinate information of the maximum interpolated depth value, and the depth face equation.

In some embodiments, the block to be tested is determined by a first block vertex, a second block vertex, a third block vertex, and a fourth block vertex. The block information includes vertex coordinates of the first block vertex, vertex coordinates of the second block vertex, vertex coordinates of the third block vertex, and vertex coordinates of the fourth block vertex. The block depth test section 1320 is further configured to: take the vertex coordinates of the first block vertex as the coordinate information of the minimum interpolated depth value, and take the vertex coordinates of the third block vertex as the coordinate information of the maximum interpolated depth value in a case where the first slope is greater than or equal to 0 and the second slope is greater than or equal to 0; take the vertex coordinates of the third block vertex as the coordinate information of the minimum interpolated depth value, and take the vertex coordinates of the first block vertex as the coordinate information of the maximum interpolated depth value in a case where the first slope is less than 0 and the second slope is less than 0; take the vertex coordinates of the second block vertex as the coordinate information of the minimum interpolated depth value, and take the vertex coordinates of the fourth block vertex as the coordinate information of the maximum interpolated depth value in a case where the first slope is greater than or equal to 0 and the second slope is less than 0; and take the vertex coordinates of the fourth block vertex as the coordinate information of the minimum interpolated depth value, and take the vertex coordinates of the second block vertex as the coordinate information of the maximum interpolated depth value in a case where the first slope is less than 0 and the second slope is greater than or equal to 0.

In some embodiments, the block depth test section 1320 is further configured to: acquire block position information of the block to be tested in the tile; generate index information of the block to be tested based on the block position information of the block to be tested; and acquire the second depth range of the block to be tested from the depth range buffer based on the index information of the block to be tested.

In some embodiments, the block depth test section 1320 is further configured to: perform a hit-miss test in the depth range buffer based on the index information of the block to be tested; acquire the second depth range of the block to be tested in a case where a hit-miss test result of the hit-miss test indicates that the second depth range of the block to be tested exists in the depth range buffer; and determine the second depth range of the block to be tested from a depth buffer, and write the second depth range of the block to be tested to the depth range buffer in a case where the hit-miss test result of the hit-miss test indicates that the second depth range of the block to be tested does not exist in the depth range buffer.

In some embodiments, the tile splitter section 1310 is further configured to: split the tile according to a preset block size, to obtain multiple initial blocks and block information corresponding to each of the multiple initial blocks; acquire primitive information of a primitive corresponding to the tile, herein the primitive information includes bounding box information of the primitive; and screen, based on the bounding box information of the primitive, the multiple initial blocks, to obtain the multiple blocks to be tested corresponding to the tile and the block data of each of the multiple blocks to be tested.

In some embodiments, the block depth test section 1320 is further configured to: generate a first test result in a case where a maximum value of the first depth range is less than a minimum value of the second depth range, herein the first test result is configured to indicate that the pixel-level depth test is not required for the block to be tested and update a depth value of each pixel in the block to be tested in a depth buffer; generate a second test result in a case where the first depth range and the second depth range overlap, herein the second test result is configured to indicate that the pixel-level depth test is required for the block to be tested; and generate a third test result in a case where a minimum value of the first depth range is greater than a maximum value of the second depth range, herein the third test result is configured to indicate that the block to be tested needs to be culled and the pixel-level depth test is not required for the block to be tested.

In some embodiments, the block depth test section 1320 is further configured to: update a minimum buffered depth value in the second depth range of the block to be tested in the depth range buffer with a minimum interpolated depth value in the first depth range in response to the depth test result for the block to be tested being the first test result or the second test result.

In some embodiments, the block-based depth test apparatus further includes a depth sorter section, and the depth sorter section is configured to: acquire, in response to a depth buffer being allocated to the tile and initialized, a depth value of each pixel in each initial block from the depth buffer; determine a second depth range corresponding to each initial block based on respective depth values of pixels in the initial block; and update the second depth range corresponding to each initial block to the depth range buffer.

In some embodiments, the depth sorter section is further configured to: read, in response to all depth values of a primitive having been written into the depth buffer, respective depth values of all pixels corresponding to the tile from the depth buffer during an early depth test and/or a late depth test; and update a second depth range corresponding to each initial block in the depth range buffer based on the respective depth values of all the pixels corresponding to the tile.

The description of the above apparatus embodiments is similar to the description of the above method embodiments, and has similar beneficial effects as the method embodiments. In some embodiments, the apparatus provided in the embodiments of the disclosure has functions or sections that may be configured to perform the method described in the above method embodiments. Any undisclosed technical details in the apparatus embodiments of the disclosure should be understood by referring to the method embodiments of the disclosure.

It should be noted that in the embodiments of the disclosure, if the block-based depth test method described above is implemented in the form of software functional sections and sold or used as an independent product, it may be stored in a computer-readable storage medium. Based on such understanding, the essence of the technical solutions in the embodiments of the disclosure or the part of the technical solutions in the embodiments of the disclosure that contributes to the related art may be embodied in the form of a software product stored in a storage medium. The software product includes several instructions that enable a computer device (which may be a personal computer, a server, or a network device, etc.) to perform all or part of the method described in the various embodiments of the disclosure. The above storage medium includes a Universal Serial Bus (USB) flash drive, a removable hard disk, a Read-Only Memory (ROM), a magnetic disk, an optical disk, or any other medium that may store program codes. In this way, the embodiments of the disclosure are not limited to any specific hardware, software, or firmware, or any combination of hardware, software, and firmware.

An embodiment of the disclosure provides a computer device, including a memory and a processor. The memory stores a computer program executable on the processor, and the processor implements, when executing the computer program, some or all of the operations in the above method.

An embodiment of the disclosure provides a computer-readable storage medium, having stored thereon a computer program that, when executed by a processor, implements some or all of the operations in the above method. The computer-readable storage medium may be transitory or non-transitory.

An embodiment of the disclosure provides a computer program, including computer-readable codes. When the computer-readable codes are executed in a computer device, a processor in the computer device implements some or all of the operations in the above method.

An embodiment of the disclosure provides a computer program product, including a non-transitory computer-readable storage medium storing a computer program. When read and executed by a computer, the computer program implements some or all of the operations in the above method. This computer program product may be implemented through hardware, software, or a combination thereof. In some embodiments, the computer program product is embodied as a computer storage medium. In other embodiments, the computer program product is embodied as a software product, e.g., a Software Development Kit (SDK), etc.

It should be noted here that the descriptions of the various embodiments above tend to emphasize differences between the embodiments, and their identical or similar aspects may be referred to each other. The descriptions of the above device, storage medium, computer program, and computer program product embodiments are similar to the description of the above method embodiments, and have similar beneficial effects as the method embodiments. Any undisclosed technical details in the device, storage medium, computer program, and computer program product embodiments of the disclosure should be understood by referring to the description of the method embodiments of the disclosure.

FIG. 14 is a schematic diagram of a hardware entity of a computer device according to an embodiment of the disclosure. As shown in FIG. 14, the hardware entity of the computer device 1400 includes a processor 1401 and a memory 1402. The memory 1402 stores a computer program executable on the processor 1401. When executing the program, the processor 1401 implements the operations of the method in any one of the above embodiments.

The memory 1402 stores the computer program executable on the processor. The memory 1402 is configured to store an instruction and an application executable by the processor 1401, and the memory 1402 may further buffer data (e.g., image data, audio data, speech communication data, and video communication data) to be processed or already processed in various parts of the processor 1401 and the computer device 1400, which may be implemented through a flash or a random access memory (RAM).

When executing the program, the processor 1401 implements the operations of the block-based depth test method in any one of the above embodiments. The processor 1401 typically controls the overall operation of the computer device 1400.

An embodiment of the disclosure provides a computer storage medium, storing one or more programs executable by one or more processors, to implement the operations of the block-based depth test method in any one of the above embodiments.

It should be noted that the descriptions of the storage medium and device embodiments above are similar to the description of the method embodiments above, and have similar beneficial effects as the method embodiments. Any undisclosed technical details in the storage medium and device embodiments of the disclosure should be understood by referring to the method embodiments of the disclosure.

The aforementioned processor may be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor.

It may be understood that other electronic devices implementing the above processor functions may be used, which are not limited in detail in the embodiments of the disclosure.

The aforementioned computer storage medium/memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), etc. The aforementioned computer storage medium/memory may also be various terminals (e.g., a mobile phone, a computer, a tablet device, a personal digital assistant, etc.) including one or any combination of the aforementioned memories.

It should be understood that the term "an embodiment" or "one embodiment" mentioned throughout the specification indicates that specific features, structures, or characteristics related to the embodiment are included in at least one embodiment of the disclosure. Therefore, the term "in an embodiment" or "in one embodiment" throughout the specification may not necessarily refer to the same embodiment. Furthermore, these specific features, structures, or characteristics may be combined in any suitable manner in one or more embodiments. It should be understood that in the various embodiments of the disclosure, the numerical order of the aforementioned operations/processes does not imply a sequence of execution. The execution sequence of the operations/processes should be determined by their functions and inherent logics, and should not impose any limitation on the implementation process of the embodiments of the disclosure. The serial numbers of the embodiments of the disclosure are for description purposes only and do not imply advantages or disadvantages of the embodiments.

It should be noted that the term "include", "comprise" or any other variation thereof in the disclosure is intended to encompass non-exclusive inclusion, such that a process, method, article, or apparatus that includes a series of elements not only includes those elements, but also includes other elements not explicitly listed, or further includes elements inherent to such process, method, article, or apparatus. Without further limitations, the element limited by the statement "include a..." does not exclude the existence of other identical elements in the process, method, article, or apparatus that includes that element.

In the several embodiments provided in the disclosure, it should be understood that the disclosed device and method may be implemented in other ways. The device embodiments described above are illustrative. For example, the division of units is a logical functional division, and there may be other divisions in actual implementation, such as multiple units or components may be combined or integrated into another system, or some features may be ignored or not executed. Furthermore, the coupling, direct coupling, or communication connection between the various components displayed or discussed may be indirect coupling or communication connection through some interfaces, devices, or units, which may be electrical, mechanical, or other forms.

The units described above as separate components may or may not be physically separated, and the components displayed as units may or may not be physical units. The components displayed as units may be located in one place or distributed across multiple network units. Some or all of the units may be selected according to actual needs to achieve the purpose of the solution in the embodiments.

Furthermore, all functional units in the various embodiments of the disclosure may be integrated into one processing unit, or each unit may be implemented separately as an independent unit, or two or more units may be integrated into one unit. The above integrated unit may be implemented in the form of hardware or in the form of hardware and software functional units. It may be understood by those of ordinary skill in the art that all or part of the operations to implement the above method embodiments may be completed through hardware related to program instructions. The aforementioned program may be stored in a computer-readable storage medium, and the program, when executed, performs the operations included in the above method embodiments. The aforementioned storage medium includes various media that may store program codes, such as a mobile storage device, a read-only memory (ROM), a magnetic disk, or an optical disk.

Alternatively, if the integrated unit mentioned above in the disclosure is implemented in the form of software functional modules and sold or used as an independent product, it may also be stored in a computer-readable storage medium. Based on such understanding, the essence of the technical solutions in the disclosure or the part of the technical solutions in the disclosure that contributes to the related art may be embodied in the form of a software product, and the computer software product is stored in a storage medium. The software product includes several instructions that enable a computer device (which may be a personal computer, a server, or a network device, etc.) to perform all or part of the method described in the various embodiments of the disclosure. The aforementioned storage medium includes various media that may store program codes, such as a mobile storage device, a ROM, a magnetic disk, or an optical disk.

The above descriptions are merely implementations of the disclosure, but the scope of protection of the disclosure is not limited thereto. Any change or replacement readily contemplated by a person skilled in the art within the technical scope disclosed in the disclosure shall fall within the scope of protection of the disclosure. Therefore, the scope of protection of the disclosure shall be subject to the scope of protection of the claims.

Industrial applicability

In the embodiments, a block-based depth test process is introduced before performing a raster process for a tile. Compared with the Early-Ztest process in the related art, the disclosure may cull occluded objects that do not need to be rendered earlier, without proceeding to the raster stage, thereby saving computational resources for the raster section. Furthermore, by setting a depth range buffer and storing a second depth range of each block in the tile by the depth range buffer, a second depth range of the block to be tested may be directly acquired from the depth range buffer, thereby improving overall rendering efficiency.

**Claims**

1. A block-based depth test method, comprising:

   before performing a raster process for a tile, splitting the tile to obtain a plurality of blocks to be tested and block data corresponding to each of the plurality of blocks to be tested; wherein the block data comprises block information of the block to be tested and primitive information corresponding to the block to be tested;
   for each of the plurality of blocks to be tested, generating a first depth range of the block to be tested based on the block information of the block to be tested and the primitive information corresponding to the block to be tested;
   acquiring a second depth range of the block to be tested from a depth range buffer; and
   determining a depth test result for the block to be tested based on the first depth range and the second depth range; wherein the depth test result is configured to indicate whether a pixel-level depth test is required for the block to be tested.

2. The method of claim 1, wherein the primitive information comprises a depth face equation of a primitive; and generating the first depth range of the block to be tested based on the block information of the block to be tested and the primitive information corresponding to the block to be tested comprises:

   determining a minimum interpolated depth value and a maximum interpolated depth value of the block to be tested based on the depth face equation of the primitive and the block information of the block to be tested; and
   generating the first depth range of the block to be tested based on the minimum interpolated depth value and the maximum interpolated depth value.

3. The method of claim 2, wherein determining the minimum interpolated depth value and the maximum interpolated depth value of the block to be tested based on the depth face equation of the primitive and the block information of the block to be tested comprises:

   determining a first slope and a second slope based on the depth face equation of the primitive; wherein the first slope represents a slope of a depth face of the primitive in a first direction, the second slope is a slope of the depth face of the primitive in a second direction, and the first direction, the second direction, and a depth direction are perpendicular to each other;
   determining coordinate information of the minimum interpolated depth value and coordinate information of the maximum interpolated depth value based on the first slope, the second slope, and the block information; and
   determining the minimum interpolated depth value and the maximum interpolated depth value based on the coordinate information of the minimum interpolated depth value, the coordinate information of the maximum interpolated depth value, and the depth face equation.

4. The method of claim 1, wherein acquiring the second depth range of the block to be tested from the depth range buffer comprises:

   acquiring block position information of the block to be tested in the tile;
   generating index information of the block to be tested based on the block position information of the block to be tested; and
   acquiring the second depth range of the block to be tested from the depth range buffer based on the index information of the block to be tested.

5. The method of claim 4, wherein acquiring the second depth range of the block to be tested from the depth range buffer based on the index information of the block to be tested comprises:

performing a hit-miss test in the depth range buffer based on the index information of the block to be tested;

in a case where a hit-miss test result of the hit-miss test indicates that the second depth range of the block to be tested exists in the depth range buffer, acquiring the second depth range of the block to be tested; and

in a case where the hit-miss test result of the hit-miss test indicates that the second depth range of the block to be tested does not exist in the depth range buffer, determining the second depth range of the block to be tested from a depth buffer, and writing the second depth range of the block to be tested to the depth range buffer.

6. The method of claim 1, wherein splitting the tile to obtain the plurality of blocks to be tested and the block data corresponding to each of the plurality of blocks to be tested comprises:

splitting the tile according to a preset block size, to obtain a plurality of initial blocks and block information corresponding to each of the plurality of initial blocks;

acquiring primitive information of a primitive corresponding to the tile; wherein the primitive information comprises bounding box information of the primitive; and

filtering, based on the bounding box information of the primitive, the plurality of initial blocks, to obtain the plurality of blocks to be tested corresponding to the tile and the block data of each of the plurality of blocks to be tested.

7. The method of claim 1, wherein determining the depth test result for the block to be tested based on the first depth range and the second depth range comprises:

in a case where a maximum value of the first depth range is less than a minimum value of the second depth range, generating a first test result; wherein the first test result is configured to indicate that the pixel-level depth test is not required for the block to be tested and update a depth value of each pixel in the block to be tested in a depth buffer;

in a case where the first depth range and the second depth range overlap, generating a second test result; wherein the second test result is configured to indicate that the pixel-level depth test is required for the block to be tested; and

in a case where a minimum value of the first depth range is greater than a maximum value of the second depth range, generating a third test result; wherein the third test result is configured to indicate that the block to be tested needs to be culled and the pixel-level depth test is not required for the block to be tested.

8. The method of claim 7, further comprising:

in response to the depth test result for the block to be tested being the first test result or the second test result, updating a minimum buffered depth value in the second depth range of the block to be tested in the depth range buffer with a minimum interpolated depth value in the first depth range.

9. The method of any one of claims 1 to 8, further comprising:

in response to a depth buffer being allocated to the tile and initialized, acquiring a depth value of each pixel in each initial block from the depth buffer;

determining a second depth range corresponding to each initial block based on respective depth values of pixels in the initial block; and

updating the second depth range corresponding to each initial block to the depth range buffer.

10. The method of any one of claims 1 to 8, further comprising:

during an early depth test and/or a late depth test, in response to all depth values of a primitive having been written into a depth buffer, reading respective depth values of all pixels corresponding to the tile from the depth buffer; and

updating a second depth range corresponding to each initial block in the depth range buffer based on the respective depth values of all the pixels corresponding to the tile.

11. A block-based depth test apparatus, comprising:

a tile splitter section, configured to split, before performing a raster process for a tile, the tile to obtain a plurality of blocks to be tested and block data corresponding to each of the plurality of blocks to be tested; wherein the block data comprises block information of the block to be tested and primitive information corresponding to the block to be tested; and

a block depth test section, configured to generate, for each of the plurality of blocks to be tested, a first depth range of the block to be tested based on the block information of the block to be tested and the primitive information corresponding to the block to be tested;

wherein the block depth test section is further configured to acquire a second depth range of the block to be tested from a depth range buffer; and

wherein the block depth test section is further configured to determine a depth test result for the block to be tested based on the first depth range and the second depth range; wherein the depth test result is configured to indicate whether a pixel-level depth test is required for the block to be tested.

12. A computer device, comprising a memory and a processor, the memory storing a computer program executable on the processor, and the processor, when executing the computer program, is configured to implement operations of the method of any one of claims 1 to 10.

13. A computer-readable storage medium, having stored thereon a computer program that, when executed by a processor, implements operations of the method of any one of claims 1 to 10.

14. A computer program product, comprising a computer program or instruction that, when executed by a processor, implements operations of the method of any one of claims 1 to 10.

TBR pipeline process

Front-end section 110

Vertex processing section 111

↓

Graphics processing section 112

↓

Tiling section 113

System memory 130

Tile information

Vertex information

Raster section 121

↓

Hidden surface removal section 122

↓

Pixel shading section 123

↓

Output merging section 124

Back-end section 120

On-chip memory 140

Depth data

Texture data

Color data

**FIG. 1**

| | |
|---|---|
| Before performing a raster process for a tile, split the tile to obtain multiple blocks to be tested and block data corresponding to each of the multiple blocks to be tested; the block data includes block information of the block to be tested and primitive information corresponding to the block to be tested | S201 |
| For each of the multiple blocks to be tested, generate a first depth range of the block to be tested based on the block information of the block to be tested and the primitive information corresponding to the block to be tested | S202 |
| Acquire a second depth range of the block to be tested from a depth range buffer | S203 |
| Determine a depth test result for the block to be tested based on the first depth range and the second depth range; the depth test result is configured to indicate whether a pixel-level depth test is required for the block to be tested | S204 |

**FIG. 2**

S202

| Determine a minimum interpolated depth value and a maximum interpolated depth value of the block to be tested based on the depth face equation of the primitive and the block information of the block to be tested | S301 |

| Determine a first slope and a second slope based on the depth face equation of the primitive | S3011 |

| Determine coordinate information of the minimum interpolated depth value and coordinate information of the maximum interpolated depth value based on the first slope, the second slope, and the block information | S3012 |

| Determine the minimum interpolated depth value and the maximum interpolated depth value based on the coordinate information of the minimum interpolated depth value, the coordinate information of the maximum interpolated depth value, and the depth face equation | S3013 |

| Generate the first depth range of the block to be tested based on the minimum interpolated depth value and the maximum interpolated depth value | S302 |

## FIG. 3

S203

| Acquire block position information of the block to be tested in the tile | S401 |

| Generate index information of the block to be tested based on the block position information of the block to be tested | S402 |

| Acquire the second depth range of the block to be tested from the depth range buffer based on the index information of the block to be tested | S403 |

| Perform a hit-miss test in the depth range buffer based on the index information of the block to be tested | S4031 |

| In a case where a hit-miss test result of the hit-miss test indicates that the second depth range of the block to be tested exists in the depth range buffer, acquire the second depth range of the block to be tested | S4032 |

| In a case where the hit-miss test result of the hit-miss test indicates that the second depth range of the block to be tested does not exist in the depth range buffer, determine the second depth range of the block to be tested from a depth buffer, and write the second depth range of the block to be tested to the depth range buffer | S4033 |

## FIG. 4

S201

| Split the tile according to a preset block size, to obtain multiple initial blocks and block information corresponding to each of the multiple initial blocks | S501 |

| Acquire primitive information of a primitive corresponding to the tile; the primitive information includes bounding box information of the primitive | S502 |

| Filter, based on the bounding box information of the primitive, the multiple initial blocks, to obtain the multiple blocks to be tested corresponding to the tile and the block data of each of the multiple blocks to be tested | S503 |

## FIG. 5

Before performing a raster process for a tile, split the tile to obtain multiple blocks to be tested and block data corresponding to each of the multiple blocks to be tested; the block data includes block information of the block to be tested and primitive information corresponding to the block to be tested — S201

For each of the multiple blocks to be tested, generate a first depth range of the block to be tested based on the block information of the block to be tested and the primitive information corresponding to the block to be tested — S202

Acquire a second depth range of the block to be tested from a depth range buffer — S203

— S601

In a case where a maximum value of the first depth range is less than a minimum value of the second depth range, generate a first test result; the first test result is configured to indicate that the pixel-level depth test is not required for the block to be tested and update a depth value of each pixel in the block to be tested in a depth buffer

— S602

In a case where the first depth range and the second depth range are overlapping, generate a second test result; the second test result is configured to indicate that the pixel-level depth test is required for the block to be tested

— S603

In a case where a minimum value of the first depth range is greater than a maximum value of the second depth range, generate a third test result; the third test result is configured to indicate that the block to be tested needs to be culled and the pixel-level depth test is not required for the block to be tested

In response to the depth test result for the block to be tested being the first test result or the second test result, update a minimum buffered depth value in the second depth range of the block to be tested in the depth range buffer with a minimum interpolated depth value in the first depth range — S604

**FIG. 6**

In response to a depth buffer being allocated to the tile and initialized, acquire a depth value of each pixel in each initial block from the depth buffer — S701

Determine a second depth range corresponding to each initial block based on respective depth values of pixels in the initial block — S702

Update the second depth range corresponding to each initial block to the depth range buffer — S703

Before performing a raster process for a tile, split the tile to obtain multiple blocks to be tested and block data corresponding to each of the multiple blocks to be tested; the block data includes block information of the block to be tested and primitive information corresponding to the block to be tested — S201

For each of the multiple blocks to be tested, generate a first depth range of the block to be tested based on the block information of the block to be tested and the primitive information corresponding to the block to be tested — S202

Acquire a second depth range of the block to be tested from a depth range buffer — S203

Determine a depth test result for the block to be tested based on the first depth range and the second depth range; the depth test result is configured to indicate whether a pixel-level depth test is required for the block to be tested — S204

## FIG. 7

Before performing a raster process for a tile, split the tile to obtain multiple blocks to be tested and block data corresponding to each of the multiple blocks to be tested; the block data includes block information of the block to be tested and primitive information corresponding to the block to be tested — S201

For each of the multiple blocks to be tested, generate a first depth range of the block to be tested based on the block information of the block to be tested and the primitive information corresponding to the block to be tested — S202

Acquire a second depth range of the block to be tested from a depth range buffer — S203

Determine a depth test result for the block to be tested based on the first depth range and the second depth range; the depth test result is configured to indicate whether a pixel-level depth test is required for the block to be tested — S204

During an early depth test and/or a later depth test, in response to all depth values of a primitive having been written into a depth buffer, read respective depth values of all pixels corresponding to the tile from the depth buffer — S801

Update a second depth range corresponding to each initial block in the depth range buffer based on the respective depth values of all the pixels corresponding to the tile — S802

## FIG. 8

907

Depth sorter section

Depth range buffer

Depth buffer

Triangle setup section

Tile spliter section

Block depth test section

Raster section

Early depth test section

Late depth test section

901

902

903

904

905

906

**FIG. 9**

1010

1020

1030

| B0 | B1 | B2 | B3 |
|----|----|----|----|
| B4 | B5 | B6 | B7 |
| B8 | B9 | B10 | B11 |
| B12 | B13 | B14 | B15 |

| B1 | B2 | B3 |
|----|----|----|
| B5 | B6 | B7 |
| B9 | B10 | B11 |
| B13 | B14 | B15 |

**FIG. 10**

Information of 4 blocks

1101

Zrange prefetcher section

Depth sorter section

1102

| Network arithmetic logic unit 0 | Network arithmetic logic unit 1 | Network arithmetic logic unit 2 | Network arithmetic logic unit 3 |

Depth range buffer

Depth buffer

1103

| Tester section 0 | Tester section 1 | Tester section 2 | Tester section 3 |

ARB

Block

**FIG. 11**

Minimum buffered depth value

Maximum buffered depth value

Z

Minimum interpolated depth value

Maximum interpolated depth value

**FIG. 12A**

Minimum buffered depth value

Maximum buffered depth value

Z

Minimum interpolated depth value

Maximum interpolated depth value

**FIG. 12B**

Minimum buffered
depth value

Maximum buffered
depth value

Z

Minimum interpolated
depth value

Maximum interpolated
depth value

## FIG. 12C

Minimum buffered
depth value

Maximum buffered
depth value

Z

Minimum interpolated
depth value

Maximum interpolated
depth value

## FIG. 12D

Tile spliter section 1310

Block depth test section 1320

Block-based depth test apparatus 1300

## FIG. 13

Computer program

Memory 1402

Run

Processor 1401

Computer device 1400

## FIG. 14

## INTERNATIONAL SEARCH REPORT

| International application No. |
|---|
| **PCT/CN2024/079698** |

**A.    CLASSIFICATION OF SUBJECT MATTER**

G06T7/50(2017.01)i;  G06T7/194(2017.01)i;  G06T7/11(2017.01)i;  G06T7/49(2017.01)i

According to International Patent Classification (IPC) or to both national classification and IPC

**B.    FIELDS SEARCHED**

Minimum documentation searched (classification system followed by classification symbols)

IPC:G06T,G06F

Documentation searched other than minimum documentation to the extent that such documents are included in the fields searched

Electronic data base consulted during the international search (name of data base and, where practicable, search terms used)

VEN, CNABS, CNTXT, EPTXT, USTXT, WOTXT, CNKI, IEEE: 区域, 深度, 测试, 检测, 光栅化, 图元, 范围, 像素, area, depth, test, detection, rasterization, primitive, range, pixel

**C.    DOCUMENTS CONSIDERED TO BE RELEVANT**

| Category* | Citation of document, with indication, where appropriate, of the relevant passages | Relevant to claim No. |
|---|---|---|
| PX | CN 116188552 A (MOLXIANCHENG INTELLIGENT TECHNOLOGY (BEIJING) CO., LTD.) 30 May 2023 (2023-05-30) <br> claims 1-13, and description, paragraph 168 | 1-14 |
| X | CN 112116519 A (IMAGINATION TECHNOLOGIES LTD.) 22 December 2020 (2020-12-22) <br> description, paragraphs 50-146, and figures 3-15 | 1-14 |
| A | CN 103886633 A (IMAGINATION TECHNOLOGIES LTD.) 25 June 2014 (2014-06-25) <br> entire document | 1-14 |
| A | CN 107993184 A (AVIC XI'AN AERONAUTICS COMPUTING TECHNIQUE RESEARCH INSTITUTE) 04 May 2018 (2018-05-04) <br> entire document | 1-14 |
| A | CN 112116518 A (SAMSUNG ELECTRONICS CO., LTD.) 22 December 2020 (2020-12-22) <br> entire document | 1-14 |
| A | US 11127148 B1 (MICROSOFT TECHNOLOGY LICENSING, LLC) 21 September 2021 (2021-09-21) <br> entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 May 2024** | **03 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/079698**

| Patent document cited in search report | | | Publication date (day/month/year) | Patent family member(s) | | | Publication date (day/month/year) |
|---|---|---|---|---|---|---|---|
| CN | 116188552 | A | 30 May 2023 | None | | | |
| CN | 112116519 | A | 22 December 2020 | US | 2020402297 | A1 | 24 December 2020 |
| | | | | US | 11030797 | B2 | 08 June 2021 |
| | | | | EP | 3754612 | A1 | 23 December 2020 |
| | | | | EP | 3754612 | B1 | 13 September 2023 |
| | | | | US | 2020402292 | A1 | 24 December 2020 |
| | | | | US | 11164364 | B2 | 02 November 2021 |
| | | | | US | 2022051474 | A1 | 17 February 2022 |
| | | | | US | 11922566 | B2 | 05 March 2024 |
| | | | | US | 2021295591 | A1 | 23 September 2021 |
| | | | | US | 11880933 | B2 | 23 January 2024 |
| | | | | EP | 3754613 | A1 | 23 December 2020 |
| | | | | EP | 4250237 | A2 | 27 September 2023 |
| | | | | EP | 4250237 | A3 | 03 January 2024 |
| | | | | GB | 2579428 | A | 24 June 2020 |
| | | | | CN | 112116520 | A | 22 December 2020 |
| | | | | CN | 115018695 | A | 06 September 2022 |
| CN | 103886633 | A | 25 June 2014 | US | 2014176544 | A1 | 26 June 2014 |
| | | | | US | 9547934 | B2 | 17 January 2017 |
| | | | | GB | 201223099 | D0 | 06 February 2013 |
| | | | | GB | 2509113 | A | 25 June 2014 |
| | | | | GB | 2509113 | B | 26 April 2017 |
| | | | | DE | 102013114176 | A1 | 26 June 2014 |
| | | | | US | 2017091986 | A1 | 30 March 2017 |
| | | | | US | 9892547 | B2 | 13 February 2018 |
| | | | | GB | 201702949 | D0 | 12 April 2017 |
| | | | | GB | 2544679 | A | 24 May 2017 |
| | | | | GB | 2544679 | B | 16 August 2017 |
| | | | | US | 2023088494 | A1 | 23 March 2023 |
| | | | | US | 2018197325 | A1 | 12 July 2018 |
| | | | | US | 11527040 | B2 | 13 December 2022 |
| | | | | CN | 107657655 | A | 02 February 2018 |
| CN | 107993184 | A | 04 May 2018 | None | | | |
| CN | 112116518 | A | 22 December 2020 | KR | 20200145673 | A | 30 December 2020 |
| | | | | TW | 202101251 | A | 01 January 2021 |
| | | | | TWI | 810462 | B | 01 August 2023 |
| | | | | US | 2020402217 | A1 | 24 December 2020 |
| US | 11127148 | B1 | 21 September 2021 | WO | 2021230934 | A1 | 18 November 2021 |
| | | | | EP | 4150576 | A1 | 22 March 2023 |
| | | | | EP | 4150576 | B1 | 27 March 2024 |

**EP 4 693 184 A1**

**Patent documents cited in the description**

- CN 202310444667X